# EUROPÄISCHE PATENTSCHRIFT

(11) **EP 3 205 011 B1**
(45) Veröffentlichungstag und Bekanntmachung des Hinweises auf die Patenterteilung: **11.07.2018**
(21) Anmeldenummer: 15828646.8
(22) Anmeldetag: 08.10.2015
(51) Int. Cl.: H02N 2/02, H02N 2/00

(54) **HAFT-GLEIT-ANTRIEB, INSBESONDERE PIEZO-AKTUIERTER TRÄGHEITSANTRIEB**
STICK-SLIP DRIVE, IN PARTICULAR PIEZO ACTUATED INERTIAL DRIVE
STICK-SLIP ENTRAÎNEMENT, NOTAMMENT ENTRAÎNEMENT D'INERTIE PAR PIEZO

(30) Priorität: 09.10.2014 DE 102014014997
(43) Veröffentlichungstag der Anmeldung: 16.08.2017
(73) Patentinhaber: Attocube Systems AG, 80539 München (DE)
(72) Erfinder: ZECH, Martin, 85464 Finsing (DE); SCHOEBEL, Jan, 81249 München (DE); PICKERT, Thomas, 81371 München (DE)
(74) Vertreter: DTS Patent- und Rechtsanwälte Schnekenbühl und Partner mbB
(86) Internationale Anmeldenummer: PCT/EP2015/001984
(87) Internationale Veröffentlichungsnummer: WO 2016/055164

(56) Entgegenhaltungen:
- US-A1- 2005 184 623

## Beschreibung

Die Erfindung betrifft einen Haft-Gleit-Antrieb, insbesondere einen piezoaktuierten Trägheitsantrieb. Außerdem betrifft die Erfindung einen Positionierer mit einem solchen Haft-Gleit-Antrieb.

Aus der EP823738B1 oder der EP1894258B1 sind piezoelektrische Antriebssysteme basierend auf stick-slip bekannt. Aus der EP1310038B1 oder der WO1993019494A1 sind piezoelektrische Antriebssysteme basierend auf block-and-slide-Prinzipien bekannt. Durch derartige Antriebe wird es ermöglicht, den mikroskopischen Hub einer Piezokeramik durch repetitive Aktuation in eine makroskopische Bewegung umzuwandeln. Hierbei zeichnen sich insbesondere die stick-slip basierten Antriebe (Haft-Gleit-Antriebe) durch ihre besonders einfache Konstruktion aus, welche es ermöglicht kostengünstige und platzsparende Positionierysteme herzustellen. Diese Systeme weisen Verfahrwege von mehreren Zentimetern bei Positionsauflösungen im Nanometerbereich auf. Anwendungen dieser Systeme finden sich insbesondere in der Forschung (Probenpositionierung in Vakuum oder Tieftemperatur). Ein weiterer Haft-Gleit-Antrieb mit einem piezoelektrischem Element wird in dem Dokument US2005184623 offenbart. Im Vakuum- und Tieftemperaturbereich weisen insbesondere die klassischen Haft-Gleit-Antriebe einen besonders ausgeprägten Nachteil gegenüber block-and-slide Mechanismen auf. Grund für diesen besonderen Nachteil ist die Tatsache, dass Haft- und Gleitreibungskoeffizienten aller in der Haft-Gleit-Technologie bisher verwendeten Materialpaarungen stark abhängig von den jeweiligen Umgebungsbedingungen sind. Besonders in Kombination mit der Reduktion der piezomechanischen Konversionskonstante bei tiefen Temperaturen führt dies zu einem rapiden Leistungsabfall der Antriebseinheit, entsprechend einem Kraftverlust bis zu Faktor 5 gegenüber ambienten Bedingungen. Obwohl Haft-Gleit-Positioniersysteme für diese speziellen Umgebungsbedingungen in ihren Anpresskräften zwischen Antriebselement und Reibfläche angepasst werden können, so stellt auch diese Methodik keine zufriedenstellende Lösung dar. Zwar kann die Positioniereinheit durch besagte Modifikationen an die angestrebten Bedingungen angepasst werden, bei ambienten Bedingungen sind die Haltekräfte dann jedoch so hoch, dass das Haft-Gleit-Prinzip nicht mehr ausgeführt werden kann, da insbesondere kein Überwinden der Haftreibung mehr möglich ist. Eine uneingeschränkte Benutzung bei unterschiedlichen Umgebungsbedingungen ist also nicht erreichbar.

Aufgabe der vorliegenden Erfindung war es daher, einen Haft-Gleit-Antrieb mit erhöhter Zuverlässigkeit und Leistung zu schaffen, insbesondere im Vakuum und unter kryogenen Bedingungen.

Die Aufgabe wird gelöst durch einen Haft-Gleit- Antrieb gemäss dem unabhängigen Anspruch 1, umfassend eine Basis und einen Läufer, die über eine Reibfläche miteinander in Berührung stehen, derart miteinander gekoppelt, dass der Läufer relativ zur Basis eine Trägheitsbewegung ausführen kann bzw. durch den Läufer relativ zur Basis eine Trägheitsbewegung ausführbar ist, wobei an der Reibfläche zwischen Basis und Läufer eine Materialpaarung aus Edelmetall und Keramik vorgesehen ist.

Beim sogenannten Haft-Gleit-Antrieb (bzw. Stick-Slip-Antrieb oder (Piezo-) Trägheitsantrieb) findet während der Haft-Phase ein Vorschub des Läufers durch der Basis statt, während in der Gleit-Phase aufgrund einer Relativbewegung zwischen Basis und Läufer kein Vorschub des Läufers entsteht. Um einen Vorschub zu erreichen, wird der Piezoaktuator elektrisch so angesteuert, dass er sich relativ langsam ausdehnt oder zusammenzieht, so dass aufgrund der Reibung zwischen der Basis und des anzutreibenden Läufers eine Mitnahme des Läufers durch die entsprechende Bewegung der Basis erfolgt. Diese Phase wird als Haft-Phase bezeichnet. In der sich anschließenden Gleit-Phase erfolgt hingegen eine elektrische Ansteuerung des Piezoaktuators derart, dass er sich schnell zusammenzieht oder ausdehnt, so dass aufgrund der Trägheit des Läufers dieser durch die entsprechende schnelle Bewegung der Basis nicht mitgenommen wird und der Läufer entlang der Basis gleitet. Der Antrieb funktioniert dabei in beiden Richtungen, d. h. entweder dehnt sich der Piezoaktor zunächst langsam aus und zieht sich anschließend schnell zusammen oder umgekehrt. Nach diesem Prinzip können Positionierer - insbesondere Trägheitspositionierer - bereitgestellt werden.

Zwischen dem Läufer und der Basis wird dort, wo Läufer und Basis miteinander in Berührung stehen eine Reibfläche gebildet. Über diese Reibfläche wird im Wechselspiel zwischen Haftreibung und Gleitreibung der Haft-Gleit-Antrieb realisiert. Basis und Läufer sind derart miteinander gekoppelt, dass der Läufer relativ zur Basis eine Trägheitsbewegung ausführen kann. Bevorzugt besteht die Materialpaarung des Läufers und der Basis aus Edelmetall und Keramik. Besonders bevorzugt besteht die Berührfläche auf Seiten des Läufers aus Keramik und auf Seiten der Basis aus Edelmetall. Besonders bevorzugt ist die Materialpaarung Zirkonoxid und Gold.

In einem weiteren Ausführungsbeispiel der vorliegenden Erfindung ist ein Haft-Gleit-Antrieb vorgesehen, bei dem Inlays aus Edelmetall- und/oder Keramik in der Basis und/oder in dem Läufer vorgesehen sind.

Die Inlays sind bevorzugt in die Basis oder den Läufer eingesetzt und bilden dort die Reibfläche. So ist es möglich, Material für die Reibfläche gezielt einzusetzen, ohne dass der ganze Läufer oder die ganze Basis aus dem Material gefertigt sein muss. Dadurch lassen sich insbesondere die Herstellkosten des Systems reduzieren.

In einem weiteren Ausführungsbeispiel der vorliegenden Erfindung ist ein Haft-Gleit-Antrieb vorgesehen, bei dem als Keramik ein keramischer oder monokristalliner Werkstoff verwendet wird, insbesondere Aluminimumoxid, Zirkonoxid, Siliziumnitrit oder Saphir.

Ein keramischer Werkstoff ist bevorzugt eine technische Keramik, besonders bevorzugt ist sie anorganisch, nicht-metallisch und polykristallin. In der Regel wird sie bei Raumtemperatur aus einer aus Keramikpulver, organischem Binder und Flüssigkeit gebildeten Rohmasse geformt und erhält ihre typischen Werkstoffeigenschaften erst in einem Sintervorgang bei hohen Temperaturen. Besonders bevorzugt ist der keramische Werkstoff im Sinne dieser Erfindung auch ein monokristalliner Werkstoff. Bevorzugt werden als keramischer Werkstoff Aluminimumoxid, Zirkonoxid oder Siliziumnitrit eingesetzt. Als monokristalliner Werkstoff eignet sich insbesondere Saphir.

In einem weiteren Ausführungsbeispiel der vorliegenden Erfindung ist ein Haft-Gleit-Antrieb vorgesehen, bei dem die Keramik eine hohe Oberflächengüte aufweist, insbesondere geläppt oder gehont und/oder poliert ist.

Die Oberflächengüte ist ein Ausdruck für die Rauheit in der Oberflächenprüfung, üblicherweise im Zusammenhang mit einem Fertigungsverfahren oder einer Oberflächenveredelung. Gängige Angaben der Rauhtiefe sind der Mittenrauwert (Arithmetisches Mittel der Abweichungen von der Mittellinie) in µm oder die gemittelte Rauhtiefe (Mittelwert aus den gemessenen Rauhtiefen) in µm.

Läppen bzw. Honen ist ein spanendes maschinelles, gegebenenfalls auch von Hand ausgeübtes, zeitbestimmtes Fertigungsverfahren zur Glättung von Oberflächen (Verringerung der Oberflächenrauheit) oder zum Abtrennen von Werkstückteilen bei Einhaltung enger Toleranzen. Hierdurch sind Mittenrauwerte von 0,2µm oder weniger realisierbar. Bevorzugt werden Mittenrauwerte von 0,1 µm oder weniger, besonders bevorzugt von 0,05µm oder weniger und ganz besonders bevorzugt von 0,01µm oder weniger realisiert. Erfindungsgemäss werden Mittenrauwerte von 0,006µm oder weniger eingesetzt. Durch das Polieren (typischerweise mit Polierfilz und Diamantpaste unterschiedlicher Körnung) kann eine nochmals bessere Oberflächengüte erreicht werden.

In einem weiteren Ausführungsbeispiel der vorliegenden Erfindung ist ein Haft-Gleit-Antrieb vorgesehen, bei dem als Edelmetall Platin, Gold, Iridium, Palladium, Silber und/oder Legierungen oder Basislegierungen dieser Werkstoffe verwendet wird.

Eine Legierung ist ein metallischer Werkstoff, der aus mindestens zwei Elementen besteht, die gemeinsam das metalltypische Merkmal des kristallinen Aufbaus mit Metallbindung aufweisen.

Eine Basislegierung ist eine Legierung mit einem Hauptbestandteil an einem Element und einem (weiteren) Element. Besonders bevorzugt sind Palladium-Basislegierungen und Platin-Legierungen, insbesondere eine 90:10 Platin:Iridium Legierung.

In einem weiteren Ausführungsbeispiel der vorliegenden Erfindung ist ein Haft-Gleit-Antrieb vorgesehen, bei dem das Edelmetall und/oder die Keramik galvanisch und/oder über PVD-Prozesse auf einen Grundkörper aufgebracht sind.

Wenn die Edelmetall- und/oder die Keramik-Reibpartner bevorzugt rein galvanisch oder galvanisch und/oder über PVD-Prozesse auf einen (bevorzugt anders gearteten) Grundkörper aufgebracht werden, lassen sich Schichtdicken des Läufers und/oder der Basis von, 2-40µm bevorzugt 5-30µm, erfindungsgemäss von 10-20µm erzeugen, die für die Anwendung ausreichen, um die geforderte Lebensdauer von wesentlich größer als 100000 Verfahrzyklen zu erreichen. Bevorzugt werden diese auf Grundkörper aus Kupfer-Beryllium (CuBe) aufgebracht. Besonders bevorzugt ist der Grundkörper ein gefrästes Metall-Inlay, welche galvanisch mit Au-beschichtet sind.

In einem weiteren Ausführungsbeispiel der vorliegenden Erfindung ist ein Haft-Gleit-Antrieb vorgesehen, bei dem Wälzlager zur mechanischen Stabilisierung des Läufers gegenüber der Basis vorgesehen sind.

Wälzlager sind Lager, bei denen zwischen einer sogenannten inneren Führung und einer äußeren Führung, im Gegensatz zu der Schmierung in Gleitlagern, rollende Körper den Reibungswiderstand verringern. Die Wälzlager dienen der mechanischen Stabilisierung des Läufers gegenüber der Basis. Besonders bevorzugt für diese Anwendung sind auf Grund ihrer hohen Führungsgenauigkeit Kreuzrollenführungen. Besonders bevorzugt sind zwangsgeführte Kreuzrollenführungen, in welchen ein Käfigwandern der eingesetzten Rollen bzw. Rollenkäfige vollständig unterdrückt wird.

In einem weiteren Ausführungsbeispiel der vorliegenden Erfindung ist ein Haft-Gleit-Antrieb vorgesehen, bei dem eine Mehrzahl von Antriebselementen zur Vervielfachung der Antriebsleistung eingesetzt wird. Bevorzugt werden die Antriebselemente parallel geschaltet, damit sie sich gegenseitig verstärken können.

In einem weiteren Ausführungsbeispiel der vorliegenden Erfindung ist ein Haft-Gleit-Antrieb vorgesehen, bei dem die Inlays in eine funkenerosiv ausgearbeitete Tasche implantiert sind. Durch Funkenerodieren können die Grundkörper der Positionierer einfach bearbeitet werden und so Taschen hochpräzise gefertigt werden, in die die Inlays genau eingepasst bzw. implantiert werden können.

Die Aufgabe wird auch gelöst durch einen Positionierer, der einen Haft-Gleit-Antrieb wie oben beschrieben umfasst.

Die Erfindung und vorteilhafte Weiterbildungen werden in den beigefügten Figuren veranschaulicht. Die Figuren zeigen hierbei:
- Figur 1a: eine schematische 3D-Ansicht eines Ausführungsbeispiels eines erfindungsgemäßen Haft-Gleit-Positionierers mit einem führungslosen Antrieb.
- Figur 1b: eine schematische Darstellung eines Schnitts in der Draufsicht des Haft-Gleit-Positionierers nach Figur 1a.
- Figur 1c: eine schematische Darstellung eines Schnitts in der Seitenansicht des Haft-Gleit-Positionierers nach Figur 1a.
- Figur 2a: eine schematische 3D-Darstellung eines weiteren Ausführungsbeispiels eines erfindungsgemäßen Haft-Gleit-Positionierers mit einem geführten Antrieb.
- Figur 2b: eine schematische Darstellung einer Seitenansicht des Haft-Gleit- Positionierers nach Figur 2a.
- Figur 3: eine schematische Darstellung einer Draufsicht eines erfindungsgemäßen geführten Haft-Gleit-Positionierers mit zwei Antriebselementen.

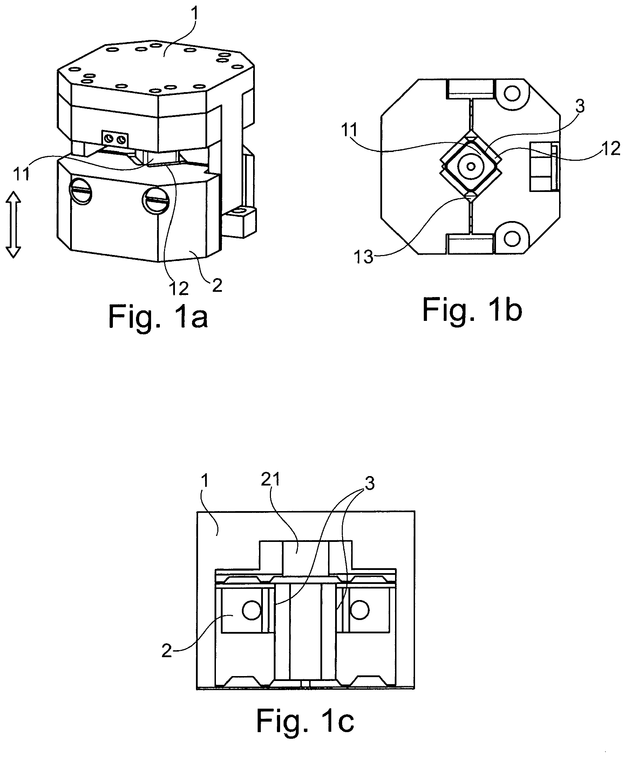

**Figur 1a, 1b und 1c** zeigen eine schematische 3D-Ansicht, einen Schnitt in der Draufsicht und einen Schnitt in der Seitenansicht eines Ausführungsbeispiels eines erfindungsgemäßen Haft-Gleit-Positionierers 40 mit einem führungslosen Antrieb 10. Eine Basis 1 ist mit einem Läufer 2 über eine mit der Basis verbundene Keramikachse 11 gekoppelt. Zwischen der Keramikachse 11 und dem Edelmetall-Inlay 12 in dem Läufer 2 wird eine Reibfläche 3 gebildet. Die Keramikachse 11 ist axial durchbohrt und damit mit verringerter Masse ausgebildet. Durch die geringere Masse wird somit eine hohe Beschleunigung bzw. Effizienz des Antriebs erreicht. Das Edelmetall-Inlay 12 ist in einer funkenerodierten Tasche 13 auf dem Läufer 2 angeordnet. Eine formschlüssige Verbindung ist mittels modernen Klebetechniken erreicht. Der Läufer 2 als bewegliche Komponente des Antriebes 10 ist hierbei nur durch die Klemmung an die Keramikachse 11 geführt und besitzt ansonsten keinerlei weitere, das System versteifende Führungen wie beispielsweise ein Wälzlager (z.B. Rollen- oder Kreuzrollenführungen). Das Design eignet sich idealerweise für die Fertigung kostengünstiger Positioniersysteme oder für die Anwendung bei Tieftemperatur. Tieftemperatur-kompatible Positionierer können nur mit großem Aufwand mit externen Führungen ausgestattet werden, da hier typischerweise Verspannungen der externen Führung/Wälzlager bei Temperaturgradienten innerhalb des Positionierers auftreten können, die eine Bewegung des Posiitonierers teilweise oder sogar vollständig verhindern.

Im Betrieb wird durch Aktuierung der Piezokeramik 21 der Läufer 2 entlang der Keramikachse 11 über die durch Keramikachse 11 und Edelmetall-Inlay 12 auf dem Läufer 2 gebildete Reibfläche relativ zur Basis 1 bewegt. Auf Seiten des Läufers 2 besitzt die Struktur sogenannte Inlays 12, welche in eine funkenerosiv ausgearbeitete Tasche implantiert sind.

Die Inlays sind in mechanischem (Reibungs)-Kontakt mit der Keramikachse und bestehen aus einem Metallkörper, welcher mit verschiedenen Oberflächen aus Edelmetall beschichtet ist. Hierbei eignen sich insbesondere edelmetallische Oberflächenbeschichtungen, insbesondere Platin, Gold, Iridium, Palladium, aber auch Silber oder Legierungen bzw. Basislegierung der genannten Edelmetalle. Durch die schlechte Oxidierbarkeit bzw. große Reaktionsträgheit dieser Werkstoffe stellt das Inlay somit eine chemisch inerte Oberfläche dar, was sich positiv auf die Konstanz der physikalischen Eigenschaften - insbesondere der Reibungskoeffizienten - auswirkt. Auf Grund der hohen Duktilität der Edelmetalle und der ausgeprägten Oberflächengüte der Keramikachse 11 findet während des Betriebs des Aktuators quasi kein Materialabrieb statt; viel eher lagert sich Edelmetall auf der Keramikachse 11 während eines Verfahrzyklusses an, wird aber beim nächsten wieder von der Edelmetalloberfläche aufgenommen; es findet also eine stetige Umwälzung der Edelmetallbeschichtung statt, weswegen diese de facto als chemisch inerter Festkörperschmierstoff arbeitet. Mit einem solchen Positioniersystem können selbst unter Verwendung von kleinen Piezokeramiken (z.B. 5x5x4 mm) hohe dynamische Kräfte von >5N erzeugt werden, unabhängig von den jeweilig vorherrschenden Umgebungsbedingungen.

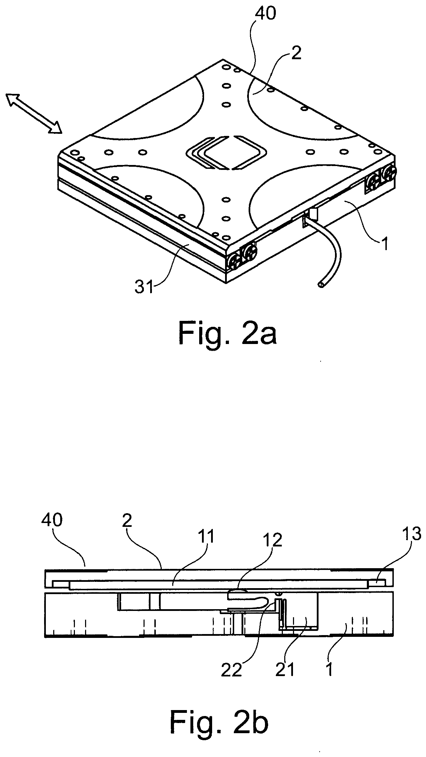

**Figur 2a und 2b** zeigen eine schematische 3D-Darstellung und eine Seitenansicht eines weiteren Ausführungsbeispiels eines erfindungsgemäßen Haft-Gleit- Positionierers 40 mit einem geführten Antrieb. Dieser Positionierer 40 wird durch ein Wälzlager 31 stabilisiert und eignet sich somit besonders für industrielle Verfahrprozesse. Im Schnittbild der Figur 2b ersichtlich ist die zur Aktuation verwendete Piezokeramik 21, die kraftübertragende Flexstruktur bzw. das Antriebselement 22 zur Regelung einer definierten Anpresskraft zwischen den Inlays 11, 12. Außerdem ist das sich darin befindende Edelmetall-Inlay 12 zu erkennen. Auf Seiten des Läufers 2 ist ein Keramik-Inlay 11 mit hoher Oberflächengüte integriert, welches als Reibpartner für das Edelmetall-Inlay 12 agiert.

Der Läufer 2 ist mittels Wälzlagern 31 (Rollen- bzw. Kreuzrollenführungen) mit dem Korpus der Positioniereinheit 40 verbunden. Diese Anordnung eignet sich insbesondere dann, wenn größere mechanische Belastungen auf den Antrieb ausgeübt werden, welche direkt über die Wälzlager 31 aufgenommen werden können. Im Gegensatz zum ersten Ausführungsbeispiel gibt es in diesem Fall keine keramische Antriebsachse; viel eher besteht die Antriebsseite aus einer funkenerodierten Flex-Struktur 22, welche sich an dem einen Ende in formschlüssiger Verbindung mit der Piezokeramik 21 befindet, am anderen Ende jedoch über das eingesetzte Edelmetall-Inlay 12 mit dem Läufer 2 in Reibkontakt steht. Auf dieser Seite ist wiederum eine Tasche13 in den Läufer 2 erodiert, in welche ein Keramik-Inlay 11 implantiert ist. Wie auch im ersten Ausführungsbeispiel weist das Keramik-Inlay 11 eine hohe Oberflächengüte auf, d.h. ist insbesondere geläppt, feingeläppt, oder gehont. Das in den Läufer 2 eingesetzte Edemetall-Inlay 12 besteht bevorzugt wiederum aus einem der Edelmetalle Platin, Gold, Iridium, Palladium, aber auch Silber und Legierungen bzw. Basislegierungen dieser Werkstoffe. Analog zum ersten Ausführungsbeispiel erlaubt diese Anordnung hohe dynamische und statische Kräfte von typischerweise mehr als 5-10N (dynamisch) bzw. 10-15N (statisch). Auf Grund der mechanischen Stabilisierung des Aktuators mittels Wälzlager ist diese Verstelleinheit insbesondere für industrielle Anwendungen bei Umgebungsbedingungen und in Vakuum geeignet.

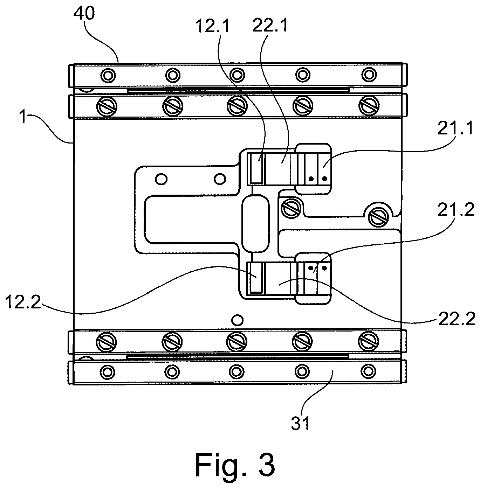

In **Figur 3** ist eine schematische Darstellung einer Draufsicht eines erfindungsgemäßen geführten Haft-Gleit-Positionierers 40 mit zwei Antriebselementen 22.1 und 22.2 gezeigt. Die Basis 1 des Positionierers 40 weist zwei Piezokeramiken 21.1 und 21.2 auf, die mit zwei Antriebselementen 22.1 und 22.2 zur Regelung einer definierten Anpresskraft zwischen den auf der Basis 1 aufgebrachten Edelmetall-Inlays 12.1 und 12.2 und dem Keramik-Inlay 11 (nicht gezeigt) in Wirkverbindung steht. Durch Anordnung mehrerer Antriebseinheiten 22 innerhalb einer Positioniereinheit 40 lassen sich die Kräfte beliebig vervielfachen.

Um die genannte Aufgabe zu lösen, werden neue Materialpaarungen vorgeschlagen, deren Reibungseigenschaften erstens nahezu unabhängig von den jeweiligen Umgebungsbedingungen sind und zweitens bei denen sich Haft- und Gleitreibungskoeffizient ausreichend unterscheiden - da dies eine notwendige Voraussetzung für das Haft-Gleit Prinzip darstellt. Ebenso werden Materialien vorgeschlagen, welche durch ihre bekannten "selbst-heilenden" Eigenschaften eine besonders lange Lebensdauer aufweisen und sich somit für den Einsatz in solchen Antriebssystemen besonders eignen.

### Bezugszeichenliste:

- 1: Basis
- 2: Läufer
- 3: Reibfläche zwischen Basis und Läufer

- 10: Haft-Gleit-Antrieb
- 11: Keramik-Inlay
- 12: Edelmetall-Inlay
- 13: Tasche zur Implementierung des Keramik-Inlays
- 15: Grundkörper

- 21: Piezokeramik
- 22: Antriebselement zur Regelung einer definierten Anpresskraft zwischen 12 und 11

- 31: Wälzlager

- 40: Positionierer

## Patentansprüche

1. Haft-Gleit-Antrieb (10), umfassend eine Basis (1) und einen Läufer (2), die über eine Reibfläche (3) miteinander in Berührung stehen, derart miteinander gekoppelt, dass der Läufer (2) relativ zur Basis (1) eine Trägheitsbewegung ausführen kann, **dadurch gekennzeichnet, dass** an der Reibfläche (3) zwischen Basis (1) und Läufer (2) eine Materialpaarung aus Edelmetall und Keramik vorgesehen ist, wobei der Edelmetall- und/oder der Keramik-Reibpartner eine Schicktdicke von 10-20 µm aufweist, wobei die Keramik eine Oberflächengüte mit einem Mittenrauwert von weniger als 0,006 µm aufweist.

2. Haft-Gleit-Antrieb (10) nach Anspruch 1, wobei die Keramik geläppt, gehont und/ oder poliert ist.

3. Haft-Gleit-Antrieb (10) nach einem der vorgehenden Ansprüche, wobei als Keramik ein keramischer oder monokristalliner Werkstoff verwendet wird, insbesondere Aluminimumoxid, Zirkonoxid, Siliziumnitrit oder Saphir.

4. Haft-Gleit-Antrieb (10) nach einem der vorgehenden Ansprüche, wobei als Edelmetall Platin, Gold, Iridium, Palladium, Silber und/oder Legierungen oder Basislegierungen dieser Werkstoffe verwendet wird.

5. Haft-Gleit-Antrieb (10) nach einem der vorgehenden Ansprüche, wobei Wälzlager (31) zur mechanischen Stabilisierung des Läufers (2) gegenüber der Basis (1) vorgesehen sind.

6. Haft-Gleit-Antrieb (10) nach einem der vorgehenden Ansprüche, wobei eine Mehrzahl von Antriebselementen (22) zur Vervielfachung der Antriebsleistung parallel geschaltet sind.

7. Positionierer (40), umfassend einen Haft-Gleit-Antrieb (10) nach einem der vorhergehenden Ansprüche.

## Claims

1. Stick-slip drive (10), comprising a base (1) and a rotor (2) which are in contact with each other via a friction surface (3), coupled with each other in such a way that the rotor (2) can carry out an inertial movement relative to the base (1), **characterized in that**, on the friction surface (3) between base (1) and rotor (2), a material pairing of noble metal and ceramic is provided, wherein the noble metal- and/or the ceramic-friction partner has a layer thickness of 10-20 µm, wherein the ceramic has a surface finish with a roughness average of less than 0.006 µm.

2. Stick-slip drive (10) according to claim 1, wherein the ceramic is lapped, honed and/or polished.

3. Stick-slip drive (10) according to one of the preceding claims, wherein a ceramic or monocrystalline material, in particular aluminium oxide, zirconium oxide, silicon nitrite or sapphire, is used as ceramic.

4. Stick-slip drive (10) according to one of the preceding claims, wherein platinum, gold, iridium, palladium, silver and/or alloys or base alloys of these materials are used as noble metal.

5. Stick-slip drive (10) according to one of the preceding claims, wherein roller bearings (31) are provided for mechanically stabilizing the rotor (2) with respect to the base (1).

6. Stick-slip drive (10) according to one of the preceding claims, wherein a plurality of drive elements (22) are connected in parallel to multiply the drive power.

7. Positioner (40), comprising a stick-slip drive (10) according to one of the preceding claims.

## Revendications

1. Entraînement stick-slip (10), comprenant une base (1) et un rotor (2) en contact entre eux via une surface de frottement (3) et couplés de telle sorte entre eux que le rotor (2) puisse réaliser un mouvement d'inertie par rapport à la base (1), **caractérisé en ce qu'**un appariement de matériaux en métal précieux et céramique est prévu au niveau de la surface de frottement (3) entre la base (1) et le rotor (2), l'homologue de frottement métal précieux et/ou céramique comportant une épaisseur de couche de 10-20 µm, la céramique ayant une qualité de surface avec une valeur brute centrale inférieure à 0,006 µm.

2. Entraînement stick-slip (10) selon la revendication 1, la céramique étant adoucie, rodée et/ou polie.

3. Entraînement stick-slip (10) selon l'une quelconque des revendications précédentes, la céramique utilisée étant une céramique ou un matériau monocristallin, notamment l'oxyde d'aluminium, l'oxyde de zirconium, le nitrure de silicium ou le saphir.

4. Entraînement stick-slip (10) selon l'une quelconque des revendications précédentes, le métal précieux utilisé étant le platine, l'or, l'iridium, le palladium, l'argent et/ou des alliages ou des alliages de base de ces matériaux.

5. Entraînement stick-slip (10) selon l'une quelconque des revendications précédentes, des paliers de roulement (31) étant prévus pour la stabilisation mécanique du rotor (2) par rapport à la base (1).

6. Entraînement stick-slip (10) selon l'une quelconque des revendications précédentes, une pluralité d'éléments d'entraînement (22) étant connectés parallèlement pour multiplier la puissance d'entraînement.

7. Positionneur (40), comprenant un entraînement stick-slip (10) selon l'une quelconque des revendications précédentes.
